**Europäisches Patentamt**

**European Patent Office**

**Office européen des brevets**

(11) Publication number: **0 212 975**
**B1**

# EUROPEAN PATENT SPECIFICATION

(45) Date of publication of patent specification: **23.01.91**

(21) Application number: **86306438.2**

(22) Date of filing: **20.08.86**

(51) Int. Cl.⁵: **A 01 K 63/04, B 01 D 35/00**

(54) Filtering device.

(30) Priority: **20.08.85 JP 182805/85**
**09.09.85 JP 198766/85**

(43) Date of publication of application:
**04.03.87 Bulletin 87/10**

(45) Publication of the grant of the patent:
**23.01.91 Bulletin 91/04**

(84) Designated Contracting States:
**DE FR GB IT NL**

(56) References cited:
**DE-A-1 911 092**
**DE-A-3 136 243**
**DE-B-1 611 095**
**FR-A-2 027 491**
**GB-A-1 317 824**
**US-A-4 186 093**

(73) Proprietor: **SUISAKU KABUSHIKI KAISHA**
**533-banchi Hon Isshiki-cho Edogawa-ku**
**Tokyo (JP)**

(72) Inventor: **Ogawa, Yonekichi**
**4-5-3, Nakameguro**
**Meguro-ku Tokyo (JP)**

(74) Representative: **Godsill, John Kenneth et al**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a filtering device comprising a riser pipe basically of cylindrical shape through which in use water in a receptacle into which the filtering device is placed, is circulated.

In DE-A-3,136,243 there is disclosed such a filtering device in which, in one form, the elongated filter cartridge comprising the device, is provided with suction elements which serve to secure the cartridge to the walls of an aquarium.

The invention is concerned with a filtering device comprising a riser pipe having an outlet port at one end and a porous air injecting member contained within the riser pipe at its other end portion, the air injection member being arranged for connection to a pressurized air source to develop a flow of water within the riser pipe.

In filtering devices of such a type, the riser pipe is commonly placed within a receptacle intended for use as an aquarium, at a distance spaced from an inner surface of the receptacle.

However, the existence of a space between the riser pipe and the inner surface of the receptacle may permit fish in the aquarium to enter that space and become trapped between the filter and the inner surface.

It is therefore desirable to provide a filtering device wherein a riser pipe can be reliably attached to, and in close contact with, the inner surface of a receptacle.

According to the present invention, there is provided a filtering device comprising a riser pipe of basically cylindrical shape having an outlet at one end and being arranged to be placed within a box-like receptacle, and a porous air injecting member contained within the riser pipe at its other end portion, the air injecting member being arranged for connection to a pressurized air source to develop a flow of water within the riser pipe, characterised in that the riser pipe is formed of an elastic material to have a back wall comprising a pair of mounting portions forming an angle slightly greater than 90° and connected to a connecting portion, and a front wall, the back wall being disposed to face into the corner with the front wall facing inwardly of the receptacle when the filtering device is fitted to the receptacle in an upright position with the outlet above the air injecting member, the riser pipe having a cross-sectional configuration such that the back and front walls are connected to form a closed section and there being suckers securely mounted on the outer surfaces of the mounting portions and adapted to attach to the surfaces respectively of the receptacle forming the corner to hold the riser pipe in close contact with the receptacle.

With such arrangement, upon pressing the riser pipe into the corner of the receptacle with the back wall thereof facing the corner, the ends of both mounting portions close to the front wall abut against the two side surfaces of the receptacle and the suckers attach to the two side surfaces. Moreover, since the riser pipe is made of an elastic material, both the mounting portions tend to move away from the two side surfaces of the receptacle, whereby the suckers are under greater suction, thus ensuring that the riser pipe is reliably secured to the receptacle.

For a better understanding of the present invention, and to show how the same may be carried into effect, reference will now be made, by way of example, to the accompanying drawings, in which:—

Figs. 1 to 4 illustrate one embodiment of the present invention, wherein

Fig. 1 is a perspective view of the whole of a filtering device attached to a tank;

Fig. 2 is an enlarged front view of a riser pipe;

Fig. 3 is a side view of the riser pipe in vertical section to an enlarged scale; and

Fig. 4 is an enlarged sectional view taken along the line IV—IV of Fig. 1; and

Figs. 5 to 7 illustrate another embodiment of the present invention, wherein

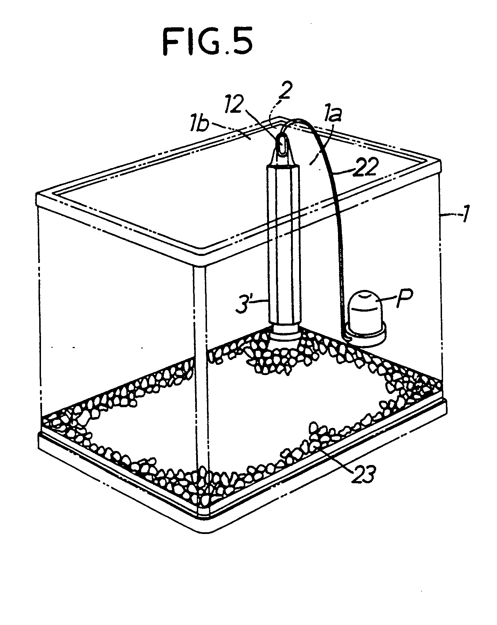

Fig. 5 is a perspective view of the whole of a filtering device attached to a tank;

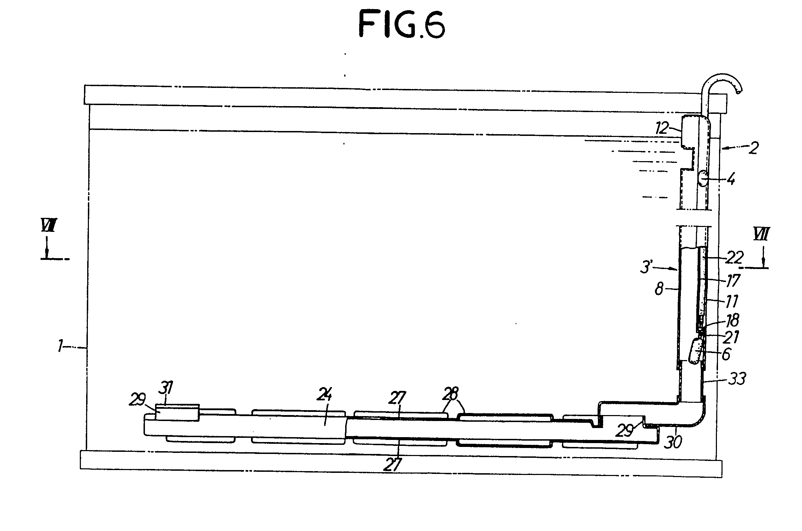

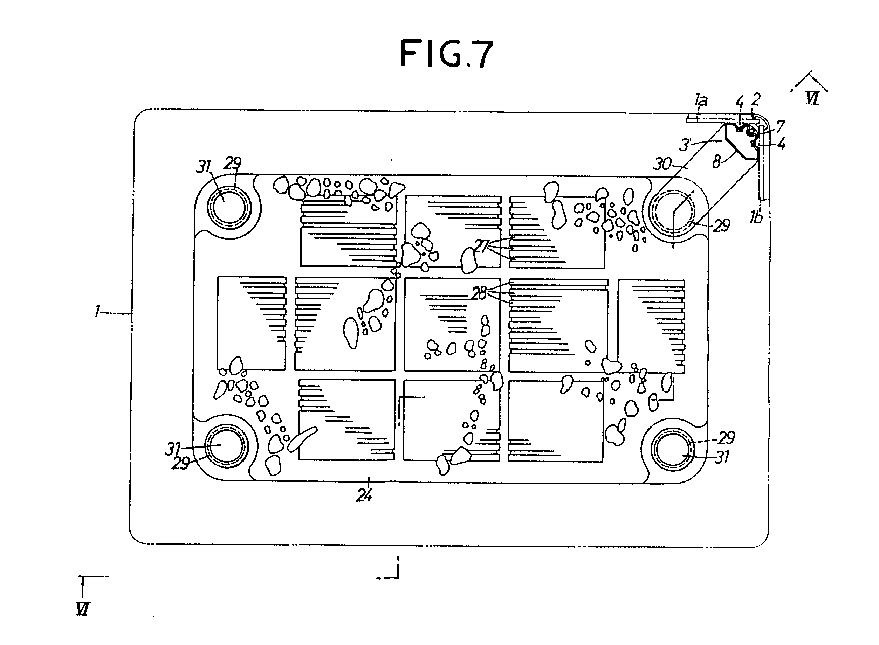

Fig. 6 is a vertical sectional view taken along the line VI—VI of Fig. 7 to an enlarged scale; and

Fig. 7 is a sectional view taken along the line VII—VII of Fig. 6.

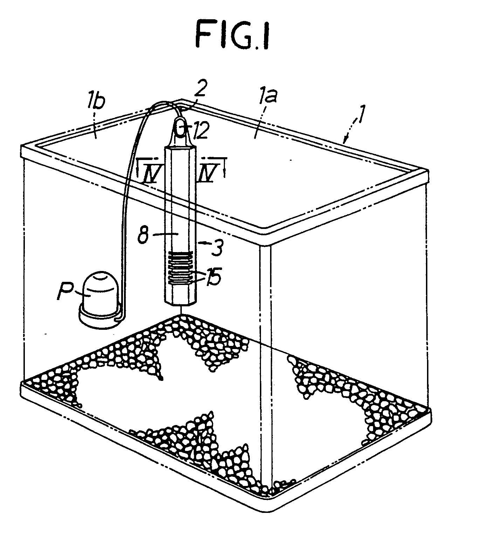

Referring first to Fig. 1 illustrating one embodiment of the present invention, there is shown a tank 1 of box-like configuration to form an aquarium for fish such as goldfish, tropical fish and saltwater fish. A riser pipe 3 of a filtering device of the present invention is attached to a corner 2 formed by two side wall surfaces 1a and 1b, intersecting at a right angle, of the tank 1. Pressurized air is supplied from an air pump P as a pressurized air source placed outside the tank 1 into the riser pipe 3, thereby producing a rising flow of water in the riser pipe 3, so that water drawn into the riser pipe 3 from the water tank 1 is filtered and then returned into the tank 1.

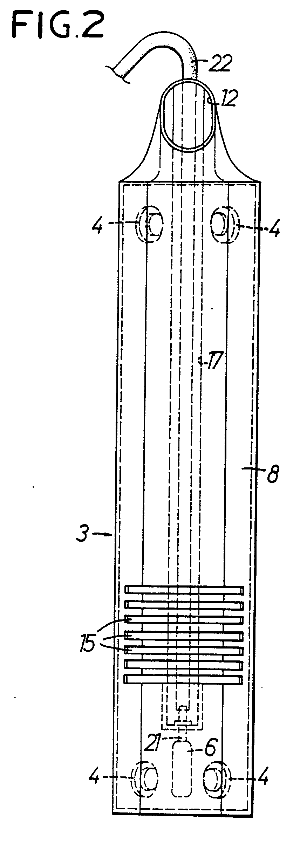

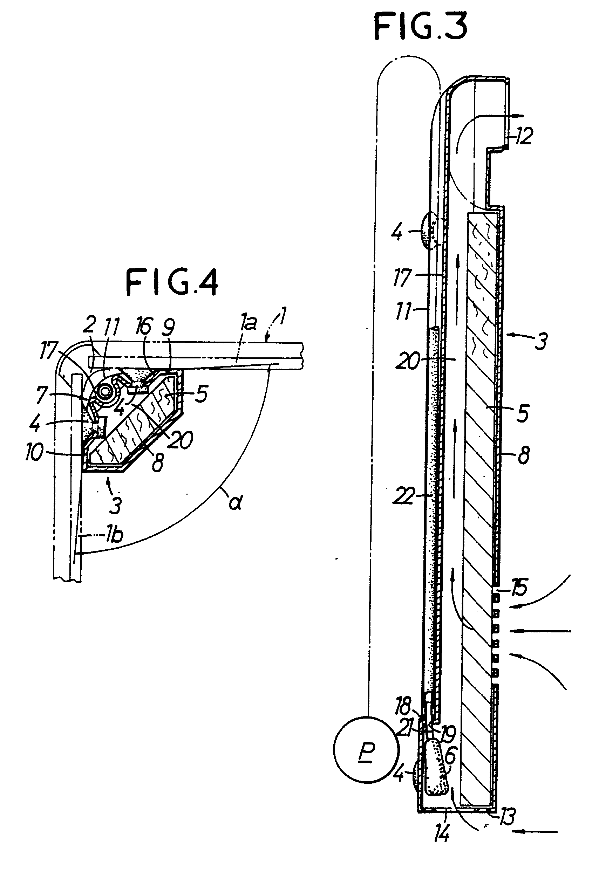

Referring also to Figs. 2, 3 and 4, the filtering device comprises the riser pipe 3, a plurality of suckers 4, filtering elements 5 and a porous air injecting member 6.

The riser pipe 3 is basically formed of an elastic material such as a synthetic resin into a cylinder closed at its lower end and having such a cross-sectional configuration that a back wall 7 disposed to be faced to the corner 2 and a front wall 8 disposed to be faced inwardly of the water tank 1 in the attached state are interconnected to form a closed section.

The back wall 7 is constituted by a pair of mounting portions 9 and 10 connected by a connecting portion 11. The mounting portions 9 and 10 are disposed at an angle slightly larger than the 90° angle formed by the side surfaces 1a and 1b of the water tank 1, and the connecting portion 11 is shaped into a circular arc curved to be concave towards the corner 2. On the other hand, the front wall 8 is shaped into a trapezoid converging inwardly of the water tank 1.

An outlet port 12 is provided in the upper end of the riser pipe 3 and opening inwardly of the water tank 1, and an auxiliary water suction port 14 is formed in the lower end wall 13 of the riser pipe 3. In addition, a plurality of slit-like water suction ports 15 are formed at vertically spaced positions in the lower portion of the front wall 8 of the riser pipe 3.

On the other hand, in the back wall 7 of the riser pipe 3, a pair of recesses 16 are provided at positions spaced lengthwise of the pipe 3 in both mounting portions 9 and 10, and a housing groove 17 is provided in the connecting portion 11. Moreover, the housing groove 17 is disposed to extend vertically from the upper end to the proximity of the lower end of the riser pipe 3 and has an upper end opening upwardly and a lower end defined by an upwardly facing end wall 18. A hole 19 is formed in the end wall 18 to lead to the inside of the riser pipe 3.

The suckers 4 are securely mounted in the individual recesses 16 in the both mounting portions 9 and 10, respectively, with the base portions of the suckers 4 being engaged with the mounting portions 9 and 10 and moreover, with the front end of each sucker 4 projecting outwardly from the outer surfaces of the mounting portions 9 and 10.

The filtering elements 5 are each shaped into a column having a cross-sectional configuration substantially corresponding to the cross-sectional configuration of the front wall 8 and are arranged within the riser pipe 3 in a manner to be offset towards the front wall 8. A conduit 20 is thus defined between the back wall 7 and the filtering elements 5 within the riser pipe 3 over the entire length of the riser pipe 3, with the upper end thereof connected to the outlet port 12 and the lower end thereof connected to the auxiliary suction port 14.

The porous air injecting member 6 is formed of a gas-permeable material such as an expandable synthetic resin and is disposed in the lower portion of the conduit 20 so that a smaller diameter connecting pipe 21 integral with the porous air injecting member 6 may project from the hole 19 into the housing groove 17.

A hose 22 is connected at one end to the air pump P outside the tank 1. The hose 22 is introduced through the upper end of the riser pipe 3 into the housing groove 17 to extend downwardly within the housing groove and is connected to the connecting pipe 21 of the porous air injecting member 6.

Description will now be made of the operation of this embodiment. In attaching the riser pipe 3 to the tank 1, the riser pipe 3 is pressed onto the corner 2 with the back wall 7 facing into the corner 2 and with the outlet port 12 corresponding to the water level within the tank 1. This causes the ends, close to the front wall 6, of both mounting portions 9 and 10 of the back wall 7 to abut against the corresponding side surfaces 1a and 1b of the tank 1. Additional pressure is placed on the riser pipe in a manner to cause the mounting portions 9 and 10 to be deflected, so that the individual suckers 4 are forced onto both side surfaces 1a and 1b. Thereupon, if the hand is released from the riser pipe 3, the individual mounting portions 9 and 10 will move away from the side surfaces 1a and 1b by their resilient action, so that the closed space between each sucker 4 and each of the side surfaces 1a and 1b is depressurized to increase the adhesive force of each sucker 4, thus ensuring that the riser pipe 3 is securely attached to the tank 1.

In such an attached state, those ends of both mounting portions 9 and 10 in the back wall 7 which are close to the front wall 8 are in close contact with the corresponding side surfaces 1a and 1b of the tank 1, so that fish are reliably prevented from entering between the riser pipe 3 and the inner surface of the tank 1. Moreover, since the hose 22 is positioned in the housing groove 17 provided in the back wall 7, it is possible to place the back wall in closer proximity to the corner 2, i.e. to reduce the space between the corner 2 and the back wall 7, which also prevents any fish from entering between the riser pipe 3 and the inner surface of the tank 1.

When pressurized air is supplied from the air pump P into the porous air injecting member 6 with the riser pipe 3 attached to the tank 1, air bubbles produced in the porous air injecting member 6 rise in the conduit 20 to produce a rising flow of water on the conduit 20. The rising flow of water is formed by water penetrating the filtering elements through the suction port 15 to enter the conduit 20 and water entering the conduit 20 through the auxiliary suction port 14. The water entering the conduit 20 through the suction port 15 penetrates the filtering elements 5 at a proper rate, so that it is purified to flow back into the tank 1. More particularly, the provision of the auxiliary suction port 14 permits the rate of the water penetrating the filtering elements 5 to be controlled at a rate suitable to accelerate the propagation of chlorella and aerobic microbes, so that organic substances such as leftover food and excreta from the fish can be decomposed by the aerobic microbes to prevent any clogging of the filtering elements 5. Furthermore the chlorella provides fresh food for the fish.

Figs. 5 to 7 illustrate another embodiment of the present invention, wherein the parts corresponding to those in the previously described embodiment are designated by the same reference numerals.

Gravel 23 is spread within the tank 1 over the bottom thereof to provide a lower filtering device which utilizes the gravel 23 as a filtering medium to filter water.

The lower type filtering device comprises a casing 24 placed on the bottom of the tank 1 with at least a part (the whole in this embodiment) buried in the gravel 23, a riser pipe 3' extending upwardly from the casing 24 and being open at its upper portion, and a porous air injecting member 6 being disposed within the riser pipe 3' at its lower end.

The casing 24 is shaped into a flat rectangular box and has a number of slit-like water suction ports 27 perforated respectively in the upper and lower opposite surfaces thereof. Each of the suction ports 27 is provided between adjacent ones of a plurality of parallel protrusions 28, whereby each suction port 27 may be prevented from being clogged with the gravel 23.

A short cylinder-like connecting pipe portion 29 is integrally mounted on the upper surface of the casing 24 to project therefrom at each of the four corners of the casing 24. A communication pipe 30 is also fitted being connected to one of the four connecting pipe portions 29. The remaining connecting pipe portions 29 are each plugged with a cap 31.

The riser pipe 3' has configuration corresponding to that of the riser pipe 3 of the previous embodiment being opened at its lower end, and is permitted to communicate with the inside of the casing 24 by a second communication pipe 33 fitted and connected to the lower portion of the riser pipe 3' and the first communication pipe 30. No filtering element is contained in the riser pipe 3'.

The following is the description of the operation of this embodiment. In fitting the lower type filtering device, the casing 24 connected with the riser pipe 3' is placed in the bottom of the tank 1, and with the back wall 7 facing the corner 2, the riser pipe 3' is pressed into the corner 2. This enables the riser pipe 3' to be securely mounted in the corner 2 in close contact with the side surface 1a and 1b as in the previous embodiment.

After the completion of the fitting of the lower filtering device, pressurized air is supplied from the air pump P into the porous air injecting member 6, so that air bubbles produced in the porous air injecting member 6 rise within the riser pipe 3' to produce a rising flow of water toward the riser pipe 3' is produced also in the casing 24 communicating with the rising pipe 3', so that water within the tank 1 is passed through the gravel 23 and filtered. Then, the filtered water enters the casing 24 through the suction port 27 and rises within the riser pipe 3' to flow back into the tank 1.

The inside of the casing 24 has been a mere space in the above embodiment, but it should be understood that the casing 24 may be filled with a filtering medium.

**Claims**

1. A filtering device comprising a riser pipe (3, 3') of basically cylindrical shape having an outlet (12) at one end and being arranged to be placed within a box-like receptacle (1), and a porous air injecting member (6) contained within the riser pipe at its other end portion, the air injecting member (6) being arranged for connection to a pressurized air source (P) to develop a flow of water within the riser pipe, characterised in that the riser pipe (3, 3') is formed of an elastic material to have a back wall (7) comprising a pair of mounting portions (9, 10) forming an angle slightly greater than 90° and connected to a connecting portion (11), and a front wall (8), the back wall (7) being disposed to face into the corner with the front wall (8) facing inwardly of the receptacle (1) when the filtering device is fitted to the receptacle (1) in an upright position with the outlet (12) above the air injecting member (6), the riser pipe (3, 3') having a cross-sectional configuration such that the back and front walls (7, 8) are connected to form a closed section and there being suckers (4) securely mounted on the outer surfaces of the mounting portions (9, 10) and adapted to attach to the surfaces respectively of the receptacle (1) forming the corner to hold the riser pipe (3, 3') in close contact with the receptacle.

2. A filtering device according to claim 1, characterised in that the riser pipe (3) is shaped as a cylinder having a closed lower end and has a water suction port (15) in the front wall (8), and filtering elements (5) are positioned within the riser pipe (3) in such a manner to be offset towards the front wall (8) to define a conduit (20) extending over the entire length of the riser pipe (3) between the filtering elements and the inner surface of the back wall (7), the porous air injecting member (6) being disposed in the lower portion of the conduit (20).

3. A filtering device according to claim 2, characterised in that an auxiliary water suction port (14) is formed in the lower portion of the riser pipe (3) in communication with the conduit (20).

4. A filtering device according to claim 1, characterised in that the riser pipe (3') is connected at its lower portion to a flat casing (24) which is buried at least partially in gravel (23) spread over the bottom of the receptacle (1) and has a plurality of water suction ports (27).

5. A filtering device according to any one of claims 1—4, characterised in that a housing groove (17) is provided in the outer surfaces of the mounting portions (9, 10) of the back wall (7) to extend from the upper end to near to the lower end of the riser pipe (3, 3') to contain a hose (22) interconnecting the porous air injecting member (6) and the pressurized air source (P), and a hole (19) is formed in an end wall at the lower portion of the housing groove (17) to permit the connection of the hose (22) with the porous air injecting member (6).

6. A filtering device according to any one of claims 1—5, characterised in that recesses (16) are formed in the outer surfaces of the mounting portions (9, 10) of the back wall (7), and each of the suckers (4) is securely mounted in a respective recess with its front end projecting from the outer surface of the mounting portion (9, 10).

**Patentansprüche**

1. Filtervorrichtung mit einem Steigleitungsrohr (3, 3') von grundlegend zylindrischer Gestalt, das einen Auslaß (12) an einem Ende aufweist und zum Einsetzen in einen kastenförmigen Behälter (1) eingerichtet ist, und einem porösen Lufteinblasteil (6), das in dem Steigleitungsrohr an seinem anderen Endabschnitt enthalten ist, wobei das Lufteinblasteil (6) zur Verbindung mit einer Druckluftquelle (P) vorgesehen ist, um einen Wasserstrom in dem Steigleitungsrohr (3, 3') zu entwickeln,

dadurch gekennzeichnet, daß das Steigleitungsrohr (3, 3') aus einem elastischen Material gebildet ist und eine Rückwand (7) mit einem Paar Montageabschnitten (9, 10), die einen Winkel von etwas mehr als 90° bilden, und eine Vorderwand (8) aufweist, wobei die Rückwand (7) so angeordnet ist, daß sie in die Ecke weist, und die Vorderwand (8) zur Innenseite des Behälters (1) weist, wenn die Filtervorrichtung an dem Behälter (1) in aufrechter Stellung mit dem Auslaß (12) oberhalb des Lufteinblasteiles (6) angebracht ist, wobei das Steigleitungsrohr (3, 3') eine derartige Querschnittsgestalt aufweist, daß die Vorder- und Rückwand (7, 8) zum Bilden eines geschlossenen Bereichs verbunden sind, und Saugnäpfe (4) an den Außenflächen der Montageabschnitte (9, 10) fest angebracht sind und dafür vorgesehen sind, an den jeweiligen die Ecke bildenden Flächen des Behälters (1) zu haften, um das Steigleitungsrohr (3, 3') in engem Kontakt mit dem Behälter zu halten.

2. Filtervorrichtung nach Anspruch 1, dadurch gekennzeichnet, daß das Steigleitungsrohr (3) als ein Zylinder mit einem geschlossenen unteren Ende geformt ist und eine Wasseransaugöffnung (15) in der Vorderwand (8) aufweist, und daß Filterelemente (5) in dem Steigleitungsrohr (3) derart positioniert sind, daß sie zu der Vorderwand (8) versetzt sind, um einen Kanal (20) zu definieren, der sich über die gesamte Länge des Steigleitungsrohres (3) zwischen den Filterelementen und der Innenfläche der Rückwand (7) erstreckt, wobei das poröse Lufteinblasteil (6) in dem unteren Abschnitt des Kanals (20) angeordnet ist.

3. Filtervorrichtung nach Anspruch 1, dadurch gekennzeichnet, daß eine zusätzliche Wasseransaugöffnung (14) in dem unteren Abschnitt des Steigleitungsrohres (3) in Verbindung mit dem Kanal (20) ausgebildet ist.

4. Filtervorrichtung nach Anspruch 1, dadurch gekennzeichnet, daß das Steigleitungsrohr (3') an seinem unteren Abschnitt mit einem flachen Gehäuse (24) verbunden ist, welches wenigstens teilweise in Kies (23) vergraben ist, der über den Boden des Behälters (1) ausgebreitet ist, und eine Mehrzahl von Wasseransaugöffnungen (27) aufweist.

5. Filtervorrichtung nach einem der Ansprüche 1 bis 4, dadurch gekennzeichnet, daß eine Aufnahmenute (17) in den Außenflächen der Montageabschnitte (9, 10) der Rückwand (7) so vorgesehen ist, daß sie sich von dem oberen Ende bis in die Nähe des unteren Endes des Steigleitungsrohres (3, 3') erstreckt, um einen Schlauch (22) zu enthalten, der das poröse Lufteinblasteil (6) und die Druckluftquelle (P) miteinander verbindet, und daß ein Loch (19) in einer Endwand an dem unteren Abschnitt der Aufnahmenute (17) gebildet ist, um die Verbindung des Schlauches (22) mit dem porösen Lufteinblasteil (6) zu gestatten.

6. Filtervorrichtung nach einem der Ansprüche 1 bis 5, dadurch gekennzeichnet, daß Aussparungen (16) in den Außenflächen der Montageabschnitte (9, 10) der Rückwand (7) gebildet sind und jeder Saugnapf (4) fest in einer entsprechenden Aussparung angebracht ist, wobei sein Vorderende von der Außenfläche des Montageabschnitts (9, 10) vorragt.

## Revendications

1. Dispositif de filtration comportant une conduite montante (3, 3') de forme de principe cylindrique, présentant une sortie (12) à une première extrémité et conçue pour être placée à l'intérieur d'un réceptacle (1) en forme de boîte, ainsi qu'un élément poreux (6) pour injection d'air contenu à l'intérieur de la conduite montante, à son autre portion d'extrémité, l'élément (6) pour injection d'air étant conçu pour liaison avec une source d'air sous pression (P) pour créer un flux d'air à l'intérieur de la conduite montante, caractérisé par le fait que la conduite montante (3, 3') est formée d'un matériau élastique présentant une paroi arrière (7), qui comprend une paire de portions de montage (9, 10) qui forment un angle légèrement supérieur à 90° et sont reliées à une portion de liaison (11), ainsi qu'une paroi avant (8), la paroi arrière (7) étant disposée pour faire face au coin et se trouver dans le coin, la paroi avant (8) faisant face vers l'intérieur du réceptacle (1) lorsque le dispositif de filtration est monté sur le réceptacle (1) en position verticale, la sortie (12) au-dessus de l'élément (6) d'injection d'air, la conduite montante (3, 3') présentant une configuration de section droite telle que les parois arrière et avant (7, 8) sont reliées pour former une section close, et étant précisé que des ventouses (4) sont fixées sur les parois extérieures des portions de montage (9, 10) et conçues pour s'attacher aux surfaces respectives du réceptacle (1) formant le coin pour maintenir la conduite montante (3, 3') en étroit contact avec le réceptacle.

2. Dispositif de filtration selon la revendication 1, caractérisé par le fait que la conduite montante (3) a la forme d'un cylindre présentant une extrémité inférieure fermée et possède un orifice (15) d'aspiration de l'eau dans la paroi avant (8), et par le fait que les éléments filtrants (5) sont placés à l'intérieur de la conduite montante (3) de façon à être décalés en direction de la paroi avant (8) pour définir un conduit (20) qui s'étend sur toute la longueur de la conduite montante (3), entre les éléments filtrants et la surface intérieure de la paroi arrière (7), l'élément poreux (6) pour injection d'air étant disposé dans la portion inférieure du conduit (20).

3. Dispositif de filtration selon la revendication 2, caractérisé par le fait qu'un orifice auxiliaire (14) d'aspiration de l'eau est formé par la portion inférieure de la conduite montante (3), en communication avec le conduit (20).

4. Dispositif de filtration selon la revendication 1, caractérisé par le fait que la conduite montante (3) est reliée, à sa portion inférieure, à un boîtier plat (24) qui est, au moins partiellement, enterré dans le gravier (23) répandu sur le fond du réceptacle (1) et qui présente une pluralité d'orifices (27) d'aspiration de l'eau.

5. Dispositif de filtration selon l'une quelconque des revendications 1 à 4, caractérisé par le fait qu'une rainure formant logement (17) est prévue sur les surfaces extérieures des portions de montage (9, 10) de la paroi arrière (7) pour s'étendre depuis l'extrémité supérieure jusqu'au voisinage de l'extrémité inférieure de la conduite montante (3, 3') pour contenir un tube souple (22) qui interconnecte l'élément poreux (6) d'injection de l'air et la source (P) d'air sous pression, et par le fait qu'un trou (19) est formé dans une paroi d'extrémité, à la portion inférieure de la rainure formant logement (17), pour permettre la liaison du tube souple (22) avec l'élément poreux (6) d'injection de l'air.

6. Dispositif de filtration selon l'une quelconque des revendications 1 à 5, caractérisé par le fait que des niches (16) sont formées dans les surfaces extérieures des portions de montage (9, 10) de la paroi arrière (7) et par le fait que chacune des ventouses (4) est fixée dans une niche respective, avec son extrémité avant débordant de la surface extérieure de la portion de montage (9, 10).

# FIG.1

# FIG.2

# FIG.3

# FIG.4

# FIG.5

# FIG.6

# FIG.7